Europäisches Patentamt

European Patent Office

Office européen des brevets

(19)

(11) Numéro de publication : **0 539 296 A1**

## (12) DEMANDE DE BREVET EUROPEEN

(21) Numéro de dépôt : **92402887.1**

(22) Date de dépôt : **22.10.92**

(51) Int. Cl.⁵ : **F21V 7/12**, G02B 19/00

(30) Priorité : **25.10.91 FR 9113226**

(43) Date de publication de la demande :
**28.04.93 Bulletin 93/17**

(84) Etats contractants désignés :
**AT BE CH DE DK ES FR GB GR IE IT LI NL PT SE**

(71) Demandeur : **ASSOCIATION POUR LA RECHERCHE ET LE DEVELOPPEMENT DES METHODES ET PROCESSUS INDUSTRIELS (ARMINES)**
**60, Boulevard Saint-Michel**
**F-75006 Paris (FR)**

(72) Inventeur : **Rabl, Ari**
**6 Avenue Faidherbe**
**F-91440 Bures/Yvette (FR)**
Inventeur : **Gordon, Jeff M.**
**Institute for Desert Research**
**Sede Boker, 84993 (IL)**

(74) Mandataire : **Bruder, Michel et al**
**Cabinet Michel Bruder 10, rue de la Pépinière**
**F-75008 Paris (FR)**

(54) **Réflecteur pour source de rayonnement à angle de rayonnement latéral maximal contrôlé.**

(57) La présente invention concerne un réflecteur pour source de rayonnement, de type plan ou cylindrique, constitué de deux éléments de réflecteur (1,1') disposés symétriquement par rapport à un plan (P) contenant l'axe longitudinal du réflecteur, caractérisé en ce que chaque élément de réflecteur (1,1') est constitué d'au moins une partie cylindrique dont les génératrices sont parallèles à l'axe longitudinal du réflecteur, la section droite de cette partie cylindrique étant constituée d'une "courbe à construction par rayons extrêmes", à savoir une courbe telle que les rayons réfléchis par les extrémités respectives (F'1,B ;F1,B') de cette courbe constituent deux rayons extrêmes formant avec le plan de symétrie (P) des angles respectifs (θa et θb), tous les rayons réfléchis sur ledit élément de réflecteur étant compris entre lesdits angles respectifs (θa et θb).

FIG.5

EP 0 539 296 A1

La présente invention concerne un réflecteur pour source de rayonnement destiné, en combinaison avec d'autres réflecteurs du même type, à assurer une distribution sensiblement uniforme dudit rayonnement sur une "surface cible" importante.

On connaît, notamment par le brevet FR-A-2 648 543, des réflecteurs, dits de type "CPC" qui, à partir d'une source de rayonnement soit plane soit cylindrique, permettent de distribuer, de façon uniforme, sur une surface cible, un rayonnement possédant un rendement énergétique maximal, et qui de plus permettent de limiter à une valeur donnée, dans le sens transversal, c'est-à-dire dans le sens perpendiculaire à l'axe longitudinal de la source lumineuse, l'angle formé, en sortie du réflecteur, par les rayons et la verticale, de façon à diminuer les phénomènes d'éblouissement.

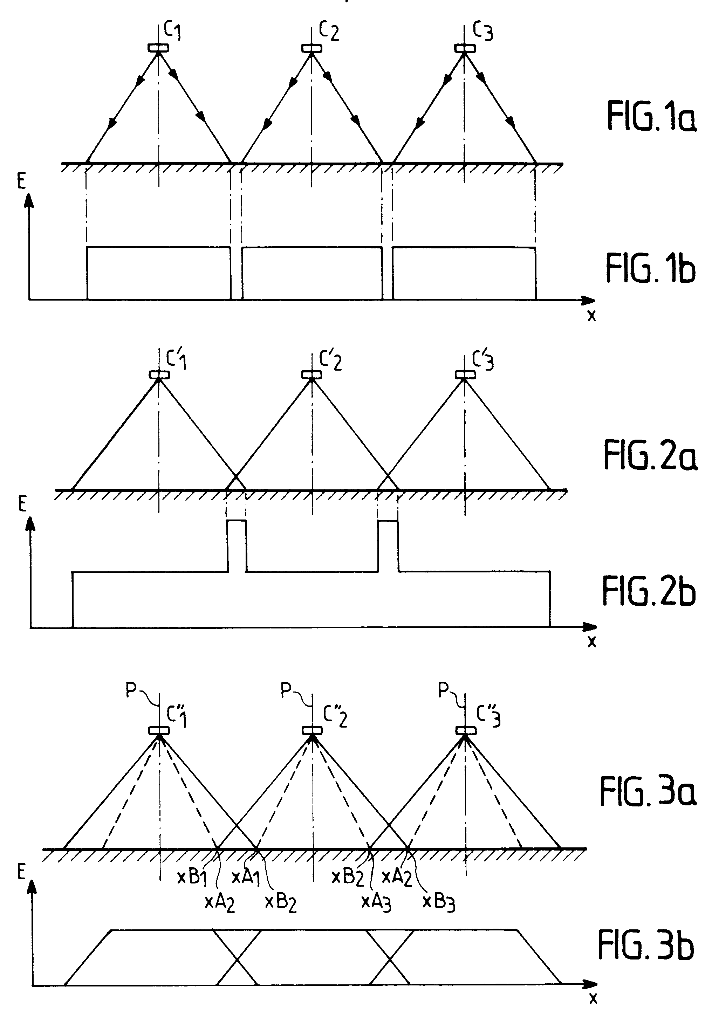

Dans ce type de réflecteurs la limitation transversale du rayonnement s'effectue de façon brutale sans aucune progressivité. C'est pourquoi il est particulièrement difficile d'associer entre eux des réflecteurs de ce type, dans le but d'obtenir une distribution lumineuse uniforme puisque, (figure 1a) une disposition trop écartée de deux réflecteurs voisins conduit à créer un défaut d'éclairement entre ces réflecteurs, alors qu'un rapprochement trop important de deux réflecteurs voisins (figure 1b) conduit à créer une zone de recouvrement de rayonnements possédant une intensité de rayonnement sensiblement égale au double de celle de la zone voisine. C'est pourquoi, sauf à disposer transversalement, de façon particulièrement précise, chacun des réflecteurs l'un par rapport à l'autre, il est extrêmement difficile d'obtenir une répartition transversale uniforme du rayonnement.

La présente invention a pour but de proposer un réflecteur du type CPC précité, qui, à la fois, possède un rendement énergétique optimal, permette de contrôler la distribution angulaire transversale du rayonnement afin de minimiser les risques d'éblouissement, et qui fournisse, en association avec d'autres réflecteurs du même type, une distribution transversale du rayonnement dont l'uniformité sur une surface cible est améliorée, sans nécessiter pour autant un positionnement particulièrement précis des réflecteurs.

La présente invention a ainsi pour objet un réflecteur pour source de rayonnement, de type plan ou cylindrique, constitué de deux éléments de réflecteur disposés symétriquement par rapport à un plan contenant l'axe longitudinal du réflecteur, caractérisé en ce que chaque élément de réflecteur est constitué d'au moins une partie cylindrique dont les génératrices sont parallèles à l'axe longitudinal du réflecteur, la section droite de cette partie cylindrique étant constituée d'une "courbe à construction par rayons extrêmes", à savoir une courbe telle que les rayons réfléchis par les extrémités respectives de cette courbe constituent deux rayons extrêmes formant, avec le plan de symétrie, des angles respectifs, tous les rayons réfléchis sur ledit élément de réflecteur étant compris entre lesdits angles respectifs.

La présente invention est notamment applicable aussi bien à des sources de rayonnement planes qu'à des sources de rayonnement cylindriques.

De plus, la demanderesse a constaté qu'en créant une séparation entre les bords transversaux de la source de rayonnement et les bords arrière du réflecteur (dans le cas d'une source de rayonnement plane) et entre la génératrice arrière de la source de rayonnement et le fond du réflecteur (dans le cas d'une source de rayonnement cylindrique) on améliorait de façon notable l'uniformité de la distribution du rayonnement produit par plusieurs réflecteurs voisins.

On décrira ci-après, à titre d'exemple non limitatif une forme d'exécution de la présente invention, en référence au dessin annexé sur lequel:

La figure 1a est une vue schématique de trois réflecteurs de la technique antérieure qui sont associés transversalement et dont les rayonnements, issus de deux réflecteurs voisins, ne sont pas jointifs sur une surface cible.

La figure 1b est un graphique représentant la distribution de l'intensité des rayonnements fournis par les trois réflecteurs de la figure 1a sur la surface cible.

La figure 2a est une vue schématique de trois réflecteurs de la technique antérieure qui sont associés transversalement et dont les rayonnements, issus de deux réflecteurs voisins, se recouvrent sur une surface cible.

La figure 2b est un graphique représentant la distribution de l'intensité des rayonnements fournis par les trois réflecteurs de la figure 2a sur la surface cible.

La figure 3a est une vue schématique de trois réflecteurs suivant l'invention qui sont associés transversalement et dont les rayonnements de deux réflecteurs voisins se recouvrent sur une surface cible.

La figure 3b est un graphique représentant la distribution de l'intensité des rayonnements fournis par les trois réflecteurs de la figure 3a sur la surface cible.

La figure 4 est une vue schématique en coupe transversale d'un réflecteur suivant l'invention, équipé d'une source de rayonnement plane.

la figure 5 est une vue schématique partielle, à plus petite échelle, du réflecteur représenté sur la figure 4 et de son rayonnement sur une surface cible.

La figure 6 est un diagramme représentant la distribution du rapport du rayonnement E, reçu par la surface cible, sur le rayonnement maximal $E_m$ reçu par celle-ci, suivant la direction transversale de ladite surface cible, pour un réflecteur du type représenté sur les figures 4 et 5.

La figure 7 est un diagramme représentant la distribution du rapport du rayonnement E, reçu par la surface cible, sur le rayonnement maximal $E_m$ reçu par celle-ci, suivant la direction transversale de ladite surface cible, pour deux réflecteurs du type représenté sur les figures 4 et 5.

La figure 8 est une vue schématique en coupe transversale d'une variante de mise en oeuvre du réflecteur représenté sur la figure 4.

La figure 9 est un diagramme représentant la distribution du rapport du rayonnement E reçu par la surface cible, sur le rayonnement maximal $E_m$ reçu par celle-ci, suivant la direction transversale de ladite surface cible, pour le réflecteur représenté sur la figure 8.

La figure 10 est un diagramme représentant la distribution du rapport du rayonnement E, reçu par la surface cible, sur le rayonnement maximal $E_m$ reçu par celle-ci, suivant la direction transversale de ladite surface cible, pour deux réflecteurs du type représenté sur la figure 8.

La figure 11 est une vue schématique en coupe transversale partielle d'une variante de mise en oeuvre du réflecteur suivant l'invention.

La figure 12 est une vue schématique en coupe transversale partielle d'une autre variante de mise en oeuvre du réflecteur suivant l'invention.

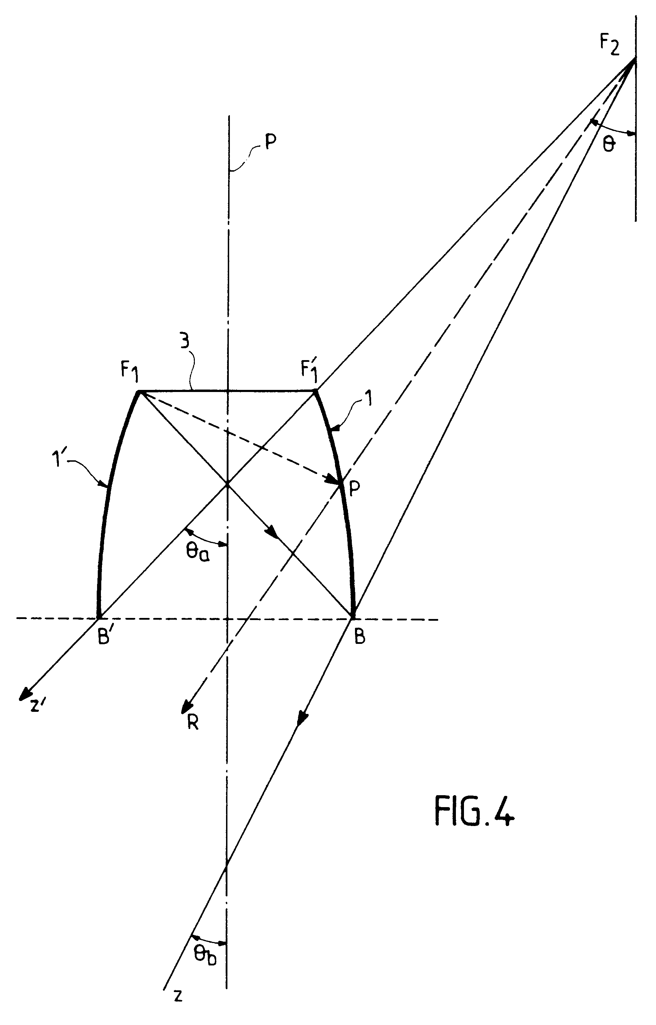

Ainsi que représenté sur la figure 4 le réflecteur suivant l'invention se compose de deux éléments de réflecteur, symétriques par rapport à un plan P vertical, perpendiculaire au plan de la figure 4, à savoir un élément de réflecteur droit 1 et un élément réflecteur gauche 1' sur la figure. La section droite de chacun de ces éléments de réflecteur 1 et 1', par un plan vertical perpendiculaire au plan P, est constituée d'un arc d'hyperbole, respectivement $F'_1B$ et $F_1B'$. Une source de rayonnement plane 3, de forme sensiblement rectangulaire, prend place entre les extrémités postérieures, $F_1$ et $F'_1$ des éléments de réflecteur 1 et 1'. Les points $F_1$ et $F'_1$ constituent de plus les premiers foyers respectifs des arcs d'hyperbole $F'_1B$ et $F_1B'$. Les seconds foyers respectifs $F_2$ et $F'_2$ (pour des raisons d'encombrement de la figure seul le foyer $F_2$ est représenté sur le dessin) de ces arcs d'hyperbole sont situés en arrière du réflecteur et sont décalés latéralement de part et d'autre du plan P.

Dans ces conditions, tout rayon incident provenant de la source de rayonnement 3 et issu du premier foyer $F_1$, se réfléchit sur l'élément de réflecteur droit 1, suivant un rayon passant par le second foyer $F_2$ de cet élément réflecteur 1.

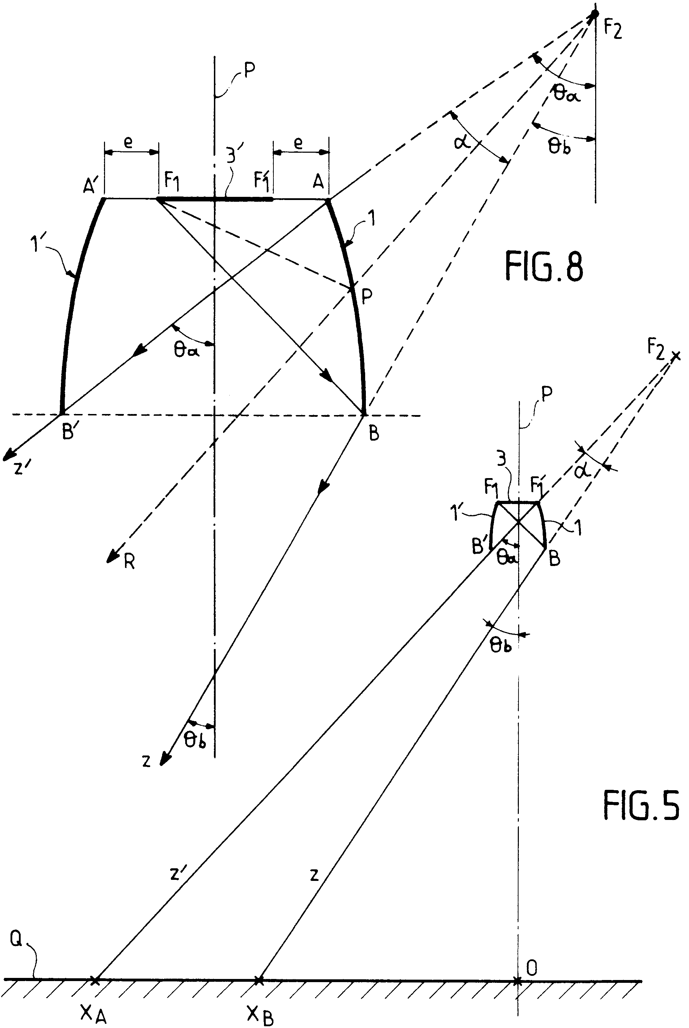

En particulier, un premier rayon extrême, issu du foyer $F_1$ se réfléchit sur l'extrémité antérieure B de l'élément de réflecteur 1, suivant un rayon Bz formant un angle $\theta_b$ avec le plan P, dont le prolongement virtuel passe par le foyer $F_2$ de l'élément de réflecteur 1. De même, un second rayon extrême issu du foyer $F_1$ se réfléchit sur l'extrémité postérieure $F'_1$ de l'élément de réflecteur 1, suivant un rayon $F'_1z'$, formant un angle $\theta_a$ avec le plan P, dont le prolongement virtuel passe par le foyer $F_2$ de l'élément réflecteur 1. Comme représenté sur la figure 5 les deux rayons extrêmes Bz et $B'z'$ rencontrent respectivement une surface cible Q horizontale en des points $x_B$ et $x_A$.

Sur la figure 5 le plan de symétrie P du réflecteur rencontre la surface cible Q au point 0, et le segment $Ox_A$ (ainsi bien entendu que le segment qui lui est symétrique par rapport au plan P) représente la distance maximale transversale de la surface cible Q susceptible de recevoir un rayonnement.

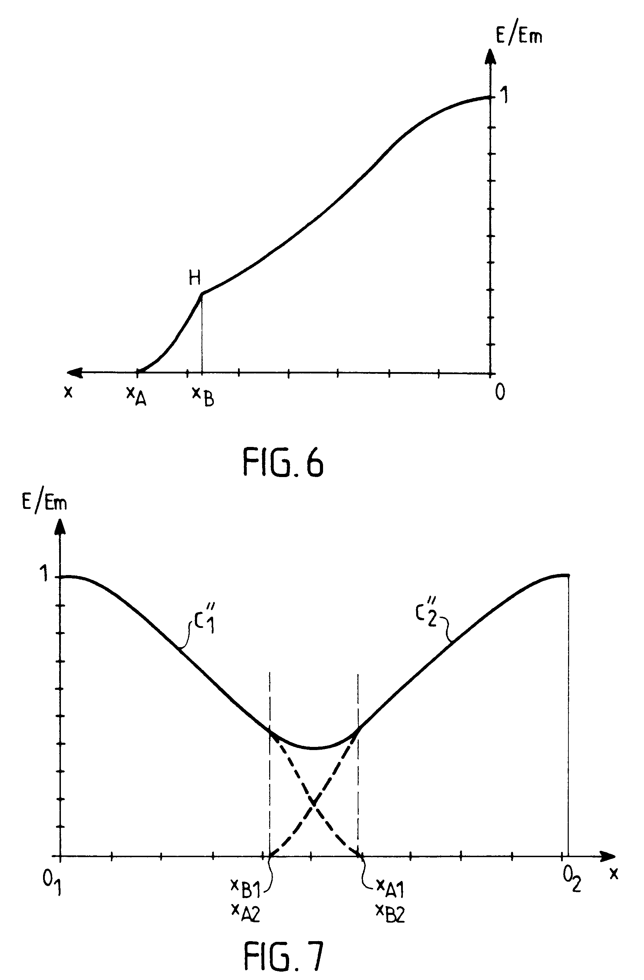

Entre le point O et le point $x_A$ la distribution du rayonnement est telle que représentée par la courbe de la figure 6. On constate ainsi, sur cette courbe, que le rayonnement E est maximal au point 0, qui correspond au centre du réflecteur, (autrement dit le rapport $E/E_m$ est égal à 1) et qu'il diminue ensuite, de façon graduelle, jusqu'au point $x_B$ où il y a un point de rebroussement H, pour diminuer ensuite, de façon plus rapide, jusqu'au point $x_A$ où le rayonnement est nul. Bien entendu l'allure de cette courbe varie avec les angles $\theta_a$ et $\theta_b$ qui constituent des paramètres caractéristiques que l'on souhaite conférer au réflecteur, le diagramme de la figure 6 étant obtenu pour des angles $\theta_a = \theta_b = 50°$.

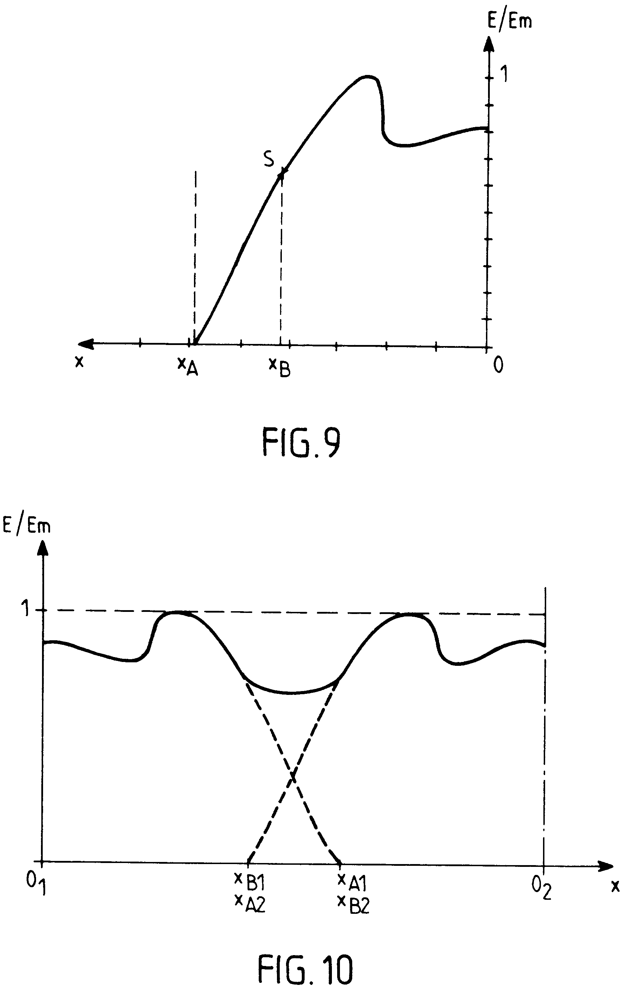

Lorsque l'on dispose côte à côte deux réflecteurs de ce type, tels que les réflecteurs $C''_1$ et $C''_2$ sur la figure 3a, de façon telle que leurs plans de symétrie P soient parallèles et que les points extrêmes $x_{A1}$ et $x_{B1}$ du réflecteur $C''_1$ soient respectivement confondus avec les points extrêmes $x_{B2}$ et $x_{A2}$ de l'autre réflecteur $C''_2$, on obtient alors entre les centres de rayonnements $0_1$ et $0_2$ des deux réflecteurs, ainsi que représenté sur la figure 7, une distribution du rayonnement dont le rapport $E/E_m$ passe par un minimum au centre de la zone comprise entre les points $x_{A2}$, $x_{B1}$ d'une part et les points $x_{A1}$, $x_{B2}$ d'autre part. Suivant l'invention on constate qu'en éloignant, ou en rapprochant, légèrement les réflecteurs l'un de l'autre à partir du positionnement idéal représenté sur la figure 7, on provoque respectivement un abaissement et une remontée du minimum de la courbe de distribution du rayonnement, sans que cette variation aille jusqu'à produire, respectivement, une zone sans rayonnement ou au contraire une zone dont le rayonnement est supérieur au niveau de rayonnement maximal souhaité pour le réflecteur.

La présente invention permet donc d'apporter une tolérance dans le positionnement latéral de réflecteurs associés pour produire un rayonnement quasi uniforme sur une surface cible.

Afin d'améliorer l'uniformité du rayonnement fourni par le réflecteur on peut, comme représenté sur la figure 8, utiliser une source de rayonnement plane 3', et des éléments de réflecteur 1 et 1' dont les extrémités postérieures respectives A et A' ne sont pas confondues avec les extrémités $F'_1$ et $F_1$ de la source de rayonnement plane 3', de façon qu'il existe un espace e entre les extrémités transversales de la source de rayonnement 3' et le bord postérieur du réflecteur. La construction des rayons se fait de la même façon que précédemment, et l'on obtient alors une distribution du rayonnement sur la surface cible Q qui est différente et qui est telle que représentée sur la figure 9. Cette distribution du rayonnement se rapproche davantage d'une distribution uniforme que celle procurée par le mode de mise en oeuvre dans lequel aucun espacement n'est prévu entre la source de rayonnement 3 et les éléments de réflecteur 1 et 1', tout au moins entre les points O et $x_B$. Ensuite, c'est-à-dire dans la zone de la surface cible Q comprise entre les points $x_B$ et $x_A$, le rayonnement diminue de façon quasi linéaire pour devenir nul au point $x_A$. Ainsi, si l'on associe deux réflecteurs voisins de ce type, de façon que leurs zones respectives comprises entre les points $x_A$ et $x_B$ se chevauchent, on obtient, entre leurs centres de rayonnement $O_1$ et $O_2$ respectifs une distribution du rayonnement dont le rapport $E/E_m$ est représenté par la courbe de la figure 10. Cette dernière met en évidence une amélioration de l'uniformité de distribution du rayonnement fourni par les réflecteurs.

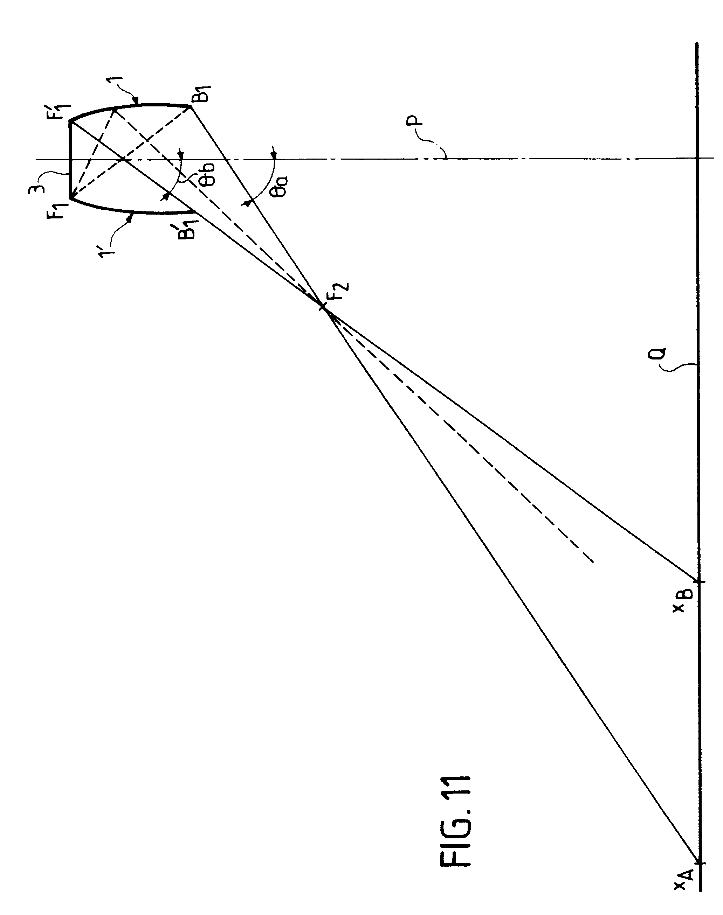

Suivant l'invention la courbe dite "à construction par rayons extrêmes" peut également être constituée d'une ellipse. Dans un tel mode de mise en oeuvre, et comme représenté sur la figure 11, les éléments de réflecteur 1 et 1' ont des sections droites respectives en forme d'arcs d'ellipse $F'_1B_1$, et $F_1B'_1$, qui ont des foyers respectifs $F_1,F_2$ d'une part et $F'_1F'_2$ d'autre part. Pour des raisons de symétrie, le foyer $F'_2$ de l'arc d'ellipse $F_1B'_1$ n'est pas représenté sur le dessin. Ainsi le rayon extrême $F_1B_1$ issu du foyer $F_1$ se réfléchit à l'extrémité antérieure $B_1$ de l'élément de réflecteur 1 suivant le rayon $B_1F_2$ et rencontre la surface cible Q en un point $x_A$. De même le rayon extrême $F_1F'_2$ issu du foyer $F_1$ se réfléchit sur l'extrémité postérieure $F'_1$ de l'élément de réflecteur 1 suivant un rayon $F'_1F_2$, et rencontre la surface cible Q en un point $x_B$.

Dans ces conditions la distribution du rayonnement est qualitativement identique à celle de la figure 6.

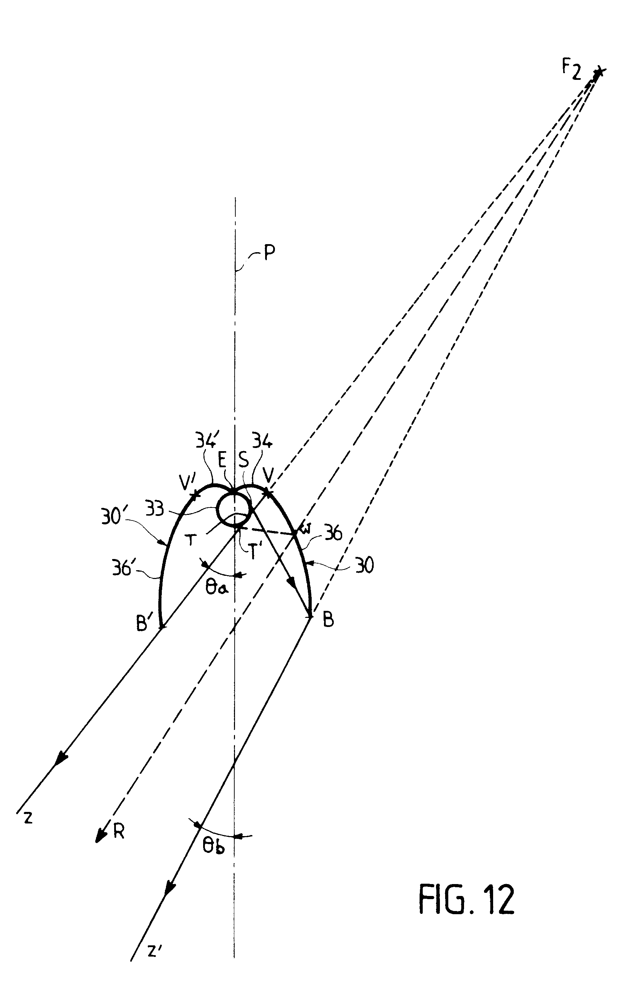

La présente invention est également utilisable lorsque la source de rayonnement est de forme cylindrique. Ainsi sur la figure 12 on a représenté un réflecteur composé de deux éléments de réflecteur, symétriques par rapport à un plan P vertical, à savoir un élément de réflecteur droit 30 et un élément de réflecteur gauche 30' sur la figure. La source de rayonnement utilisée est de forme cylindrique, et sa directrice est constituée d'un cercle 33. La source de rayonnement cylindrique est en contact, au point E, avec le fond du réflecteur et est disposée symétriquement par rapport au plan P. Chacun des éléments de réflecteur 30 et 30' est constitué de deux parties, à savoir une partie postérieure 34,34', en forme de développante de cercle classique, et une partie antérieure 36,36' dite développante généralisée, et qui constitue également une "courbe à construction par rayons extrêmes" et qui se raccorde en un point V,V' tangentiellement à la première.

Un premier rayon extrême est constitué d'un rayon TV tangent, en un point T, au cercle 33 et formant avec le plan P un angle $\theta_a$ égal au rayon réfléchi transversal maximal souhaité. Ce rayon frappant la "courbe à construction par rayons extrêmes" se réfléchit sur lui-même au point V suivant le rayon Vz, en passant par le foyer F2 de ladite courbe. Le rayon réfléchi Vz définit également le point antérieur B' de l'autre élément de réflecteur 30' qui se trouve à l'intersection de l'arc définissant l'élément de réflecteur 30' avec la droite Vz. De même tous les rayons tangents en un point T' au cercle 33 et se réfléchissant sur l'arc VB se réfléchissent sur celui-ci en un point W, suivant une direction $F_2W$.

D'autre part, suivant l'invention, en raison des propriétés de la développante de cercle classique, tous les rayons tangents au cercle 33 se réfléchissent sur eux-mêmes, de sorte que tous les rayons compris entre les points T et E sortent du réflecteur et constituent donc des rayons efficaces irradiant la surface cible.

Comme exposé précédemment la régularité de l'éclairement fourni par le réflecteur suivant l'invention peut encore être améliorée si l'on écarte la source lumineuse cylindrique du fond du réflecteur.

## Revendications

**1.-** Réflecteur pour source de rayonnement, de type plan ou cylindrique, constitué de deux éléments de réflecteur (1,1',30,30') disposés symétriquement par rapport à un plan (P) contenant l'axe longitudinal du réflecteur, caractérisé en ce que chaque élément de réflecteur (1,1',30,30') est constitué d'au moins une partie cylindrique dont les génératrices sont parallèles à l'axe longitudinal du réflecteur, la section droite de cette partie cylindrique étant constituée d'une "courbe à construction par rayons extrêmes", à savoir une courbe telle que les rayons réfléchis par les extrémités respectives (F'1,B;F_1,B';A',B';V,B; V',B') de cette courbe constituent deux rayons extrêmes formant avec le plan de symétrie (P) des angles respectifs ($\theta\underline{a}$ et $\theta\underline{b}$), tous les rayons réfléchis sur ledit élément de réflecteur étant compris entre lesdits angles respectifs ($\theta\underline{a}$ et $\theta\underline{b}$).

**2.-** Réflecteur suivant la revendication 1 caractérisé en ce que tout rayon tangent à la source de rayonnement (33,33') se réfléchit en passant par un point fixe ($F_2,F'_2$) ou foyer de ladite "courbe à construction par rayons extrêmes".

**3.-** Réflecteur suivant la revendication 1 caractérisé en ce que tout rayon issu d'une extrémité de la source de rayonnement se réfléchit en passant par un point fixe ($F_2,F'_2$) ou foyer de ladite "courbe à construction par rayons extrêmes".

**4.-** Réflecteur suivant la revendication 1 caractérisé en ce que ladite "courbe à construction par rayons extrêmes" est un arc d'hyperbole.

**5.-** Réflecteur suivant la revendication 1 caractérisé en ce que ladite "courbe à construction par rayons extrêmes" est un arc d'ellipse.

**6.-** Réflecteur suivant l'une quelconque des revendications précédentes caractérisé en ce que la source de rayonnement (3,3') est une source plane, symétrique par rapport au plan de symétrie (P) du réflecteur, disposée dans un plan déterminé par les bords postérieurs (A,A';F$_1$,F'$_1$) du réflecteur.

**7.-** Réflecteur suivant la revendication 6 caractérisé en ce qu'un foyer (F$_1$,F'$_1$) de ladite courbe est constitué par l'extrémité transversale de la source plane (3,3'), la plus éloignée de ladite courbe.

**8.-** Réflecteur suivant la revendication 7 caractérisé en ce qu'un espace (e) est prévu entre les extrémités transversales respectives (F$_1$,F'$_1$) de la source lumineuse (3') et les bords postérieurs (A,A') des éléments de réflecteur (1,1').

**9.-** Réflecteur suivant la revendication 1 caractérisé en ce que la source de rayonnement est en forme de cylindre à directrice circulaire (33) dont les génératrices sont parallèles à l'axe longitudinal du réflecteur et qui est symétrique par rapport au plan de symétrie (P) du réflecteur.

**10.-** Réflecteur suivant la revendication 9 caractérisé en ce que le susdit élément de réflecteur (30,30') est constitué de deux parties cylindriques, à savoir une première partie cylindrique postérieure (34,34') dont la section droite est une développante de cercle de type classique, et une seconde partie cylindrique antérieure (36,36') qui se raccorde tangentiellement à la première et dont la section droite est une "courbe à construction par rayons extrêmes".

**11.-** Réflecteur suivant la revendication 10 caractérisé en ce que les sections droites des deux parties cylindriques (34,36;34',36') se raccordent tangentiellement en un point (V,V').

**12.-** Réflecteur suivant l'une des revendications 9 à 11 caractérisé en ce que la source de rayonnement cylindrique est éloignée du fond du réflecteur.

FIG.1a

FIG.1b

FIG.2a

FIG.2b

FIG.3a

FIG.3b

FIG.4

FIG.8

FIG.5

FIG. 6

FIG. 7

FIG.9

FIG.10

FIG. 11

EP 0 539 296 A1

FIG. 12

**Office européen des brevets**

## RAPPORT DE RECHERCHE EUROPEENNE

Numero de la demande

EP  92 40 2887

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-U-8 714 134 (HERMANN HAHN) <br> * le document en entier * <br> --- | 1 | F21V7/12 <br> G02B19/00 |
| A | AU-B-504 407 (F. WOLFF) <br> * page 8, ligne 26 - page 9, ligne 5; revendications 1,8; figure 5 * <br> --- | 1 | |
| A | WO-A-8 905 463 (FRAUNHOFER GESELLSCHAFT ZUR FÖRDERUNG DE ANGEWANDTEN FORSCHUNG E.V.) <br> * abrégé; revendications 1,2; figures 1,2 * <br> ----- | 1 | |

**DOMAINES TECHNIQUES RECHERCHES (Int. Cl.5)**

F21V
G02B

Le présent rapport a été établi pour toutes les revendications

| Lieu de la recherche | Date d'achèvement de la recherche | Examinateur |
|---|---|---|
| LA HAYE | 29 DECEMBRE 1992 | VAN DOREMALEN J.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................................
& : membre de la même famille, document correspondant

EPO FORM 1503 03.82 (P0402)